**Europäisches Patentamt**

**European Patent Office**

**Office européen des brevets**

(19)

(11) Veröffentlichungsnummer: **0 144 564**
**B1**

(12) # EUROPÄISCHE PATENTSCHRIFT

(45) Veröffentlichungstag der Patentschrift:
26.08.87

(21) Anmeldenummer: **84110793.1**

(22) Anmeldetag: **11.09.84**

(51) Int. Cl.⁴: **G 02 C 5/00, C 22 C 19/03**

(54) **Verwendung von Nickellegierungen für Brillengestelle.**

(30) Priorität: 05.11.83 DE 3340054

(43) Veröffentlichungstag der Anmeldung:
19.06.85 Patentblatt 85/25

(45) Bekanntmachung des Hinweises auf die Patenterteilung:
26.08.87 Patentblatt 87/35

(84) Benannte Vertragsstaaten:
AT BE CH DE FR GB IT LI LU NL SE

(56) Entgegenhaltungen:
DE - B - 1 218 161
FR - A - 1 251 881
FR - A - 2 472 029
GB - A - 229 839
US - A - 1 716 050

CHEMICAL ABSTRACTS, Band 87, 1977, Seite 261, Nr. 57121s, Columbus, Ohio, US
CHEMICAL ABSTRACTS, Band 87, 1977, Seite 261, Nr. 57122s, Columbus, Ohio, US

(73) Patentinhaber: **Degussa Aktiengesellschaft,
Weissfrauenstrasse 9, D-6000 Frankfurt am Main 1 (DE)**

(72) Erfinder: **Heidsiek, Horst, Dr. Dipl.-Phys.,
Fürstenbergstrasse 8, D-6450 Hanau 9 (DE)**
Erfinder: **Jäckel, Gernot, Dipl.-Ing., Taunusstrasse 65,
D-6467 Hasselroth I (DE)**
Erfinder: **Becker, Horst, Heinrich-Helne-Strasse 1,
D-6458 Rodenbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Nickellegierungen für Brillengestelle und Brillenteile.

Brillengestelle und Brillenteile werden vielfach aus Metallen bzw. Metallegierungen gefertigt. Dabei kommen in der Hauptsache Kupferlegierungen, wie z.B. Zinnbronze (CuSn 6, CuSn 8), Kupfer-Bronze (Cu 82 Ni 2 Sn 5 Zn 11) und Neusilber, oder Nickellegierungen zur Anwendung, die sich zwar durch gute Bearbeitbarkeit auszeichnen, aber eine hohe Korrosionsanfälligkeit besitzen, so dass die aus diesen Werkstoffen gefertigten Brillenteile mit Überzügen aus edleren Metallen bzw. Legierungen versehen werden müssen. Der Gebrauch solcher Verbundwerkstoffe ist jedoch unbefriedigend, da bereits kleinste Poren in den Überzügen den Trägerwerkstoff korrodieren lassen und Brillen als Gebrauchsgegenstände einem abrasiven Verschleiss unterliegen, der nach einiger Zeit den unedlen Trägerwerkstoff freilegt.

In jüngerer Zeit werden Nickel-Chrom- und Nickel-Chrom-Silberlegierungen für Brillenteile (DE-A-3 045 334) vorgeschlagen, die sich durch eine gute Korrosionsbeständigkeit auszeichnen, aber eine mangelhafte Bearbeitbarkeit aufweisen. So ist z.B. eine Nickellegierung mit 10 bis 15% Chrom nur schlecht spanabhebend bearbeitbar, da sie zum Aufschweissen auf das Werkzeug neigt. Die spanabhebende Bearbeitbarkeit lässt sich zwar durch die Zugabe von ca. 1% Silber zum Nickel-Chrom verbessern, doch wird dies durch einen höheren Materialpreis und eine diffizilere Verarbeitungstechnik erkauft. Die spanlose Verformung ist auch bei diesen Werkstoffen schwierig, da beide Werkstofftypen (Ni-Cr, Ni-Cr-Ag) eine sehr steile Verfestigungscharakteristik mit steigendem Umformungsgrad aufweisen und so mehrfach weichgeglüht werden müssen. Die Umformung gelingt ausserdem nur mit Spezialwalzen und speziellen Ziehdüsen.

Es war daher Aufgabe der vorliegenden Erfindung, Nickellegierungen für Brillengestelle und Brillenteile zu entwickeln, die korrosionsbeständig und trotzdem gut verformbar und bearbeitbar sind.

Diese Aufgabe wird erfindungsgemäss durch die Verwendung von Nickellegierungen gelöst, die neben Nickel 5 bis 20 Gew.-% Kupfer, 5 bis 30 Gew.-% Zink, 0 bis 2 Gew.-% Mangan, 0 bis 2 Gew.-% Silizium, 0 bis 1 Gew.-% Beryllium und je 0 bis 4 Gew.-% Aluminium und/oder Chrom und/oder Molybdän und/oder Wolfram und/oder Vanadium und/oder Titan enthalten, wobei der Gesamtgehalt an Beryllium, Aluminium, Chrom, Molbydän, Wolfram, Vanadium und Titan nicht mehr als 6 Gew.-% betragen darf.

Vorzugsweise enthalten die Legierungen 8 bis 15% Kupfer und 8 bis 25% Zink. Ausserdem ist es günstig, den Legierungen bei Anwesenheit von Chrom, Molybdän, Wolfram, Vanadium und/oder Titan 0 bis 0,5% Kohlenstoff zuzusetzen.

Die Nickel-Kupfer-Zink-Legierungen besitzen eine ausgezeichnete Korrosionsbeständigkeit und eine gute Verarbeitbarkeit. Die möglichen Zusätze an Mangan verhindern eine Versprödung durch Schwefel, Silizium wirkt als Desoxidationszusatz beim Schmelzen, Beryllium, Aluminium, Chrom, Molybdän, Wolfram, Vanadium und Titan verbessern die Federeigenschaften des Werkstoffs.

In der Tabelle sind die Eigenschaften einiger bekannter Brillenwerkstoffe (7 bis 10) und einiger Legierungen gemäss der Erfindung (1 bis 6) aufgeführt. Die Korrosionsbeständigkeit wurde sowohl mit künstlichem Schweiss als auch nach DIN 50 018 bestimmt.

| Lfd. | | Zusammensetzung (Gew.-%) | | | Härte (Vickers) | | Umformbarkeit | Verfestigung | Galvanisierbarkeit | Korrosionsbeständigkeit |
|---|---|---|---|---|---|---|---|---|---|---|
| Nr. | Ni | Cu | Zn | sonst. | weich | hart | | | | |
| 1 | 84,5 | 7,6 | 7,8 | Si 0,1 | 105 | 243 | gut | flach | sehr gut | sehr gut |
| 2 | 60 | 13 | 27 | — | 112 | 282 | gut | mittel | sehr gut | gut |
| 3 | 71 | 18 | 10 | Mn 0,5 | 108 | 232 | gut | flach | sehr gut | gut |
| 4 | 73 | 13 | 14 | — | 103 | 240 | gut | flach | sehr gut | sehr gut |
| 5 | 78,3 | 10,6 | 10,9 | Be 0,2 | 118 | 260 | gut | flach | gut | sehr gut |
| 6 | 78,3 | 10,5 | 10,8 | Al 0,4 | 113 | 250 | gut | flach | gut | sehr gut |
| 7 | 18 | 62 | 20 | — | 100 | 230 | gut | flach | sehr gut | ungenügend |
| 8 | 68 | 32 | — | Fe 1, Mn 1 | 110 | 260 | befriedigend | steil | gut | ausreichend |
| 9 | 89 | 1 | — | Cr 10 | 130 | 310 | schlecht | steil | befriedigend | gut |
| 10 | 83 | 1 | — | Cr 15 Ag 1 | 180 | 350 | sehr schlecht | sehr steil | befriedigend | sehr gut |

## Patentansprüche

1. Verwendung von Nickellegierungen für Brillengestelle und Brillenteile, dadurch gekennzeichnet, dass die Legierungen neben Nickel 5 bis 20 Gew.-% Kupfer, 5 bis 30 Gew.-% Zink, 0 bis 2 Gew.-% Mangan, 0 bis 2 Gew.-% Silizium, 0 bis 1 Gew.-% Beryllium und je 0 bis 4 Gew.-% Aluminium und/oder Chrom und/oder Molybdän und/oder Wolfram, und/oder Vanadium und/oder Titan enthalten, wobei der Gesamtgehalt an Beryllium, Aluminium, Chrom, Molybdän, Wolfram, Vanadium und Titan nicht mehr als 6 Gew.-% betragen darf.

2. Verwendung von Nickellegierungen gemäss Anspruch 1, dadurch gekennzeichnet, dass sie bei Anwesenheit von Chrom, Molybdän, Wolfram, Vanadium und/oder Titan 0 bis 0,5 Gew.-% Kohlenstoff enthält.

3. Verwendung von Nickellegierungen gemäss Anspruch 2, dadurch gekennzeichnet, dass sie 8 bis 15 Gew.-% Kupfer und 8 bis 25 Gew.-% Zink enthalten.

## Claims

1. Use of nickel alloys for spectacle frames and spectacle parts, characterised in that the alloys contain, in addition to nickel, from 5 to 20% by weight of copper, from 5 to 30% by weight of zinc, from 0 to 2% by weight of manganese, from 0 to 2% by weight of silicon, from 0 to 1% by weight of beryllium and from 0 to 4% by weight each of aluminium and/or chromium and/or molybdenum and/or tungsten and/or vanadium and/or titanium, wherein the total content of beryllium, aluminium, chromium, molybdenum, tungsten, vanadium and titanium should not exceed 6% by weight.

2. Use of nickel alloys according to Claim 1, characterised in that they contain from 0 to 0.5% by weight of carbon when chromium, molybdenum, tungsten, vanadium and/or titanium are present.

3. Use of nickel alloys according to Claims 1 and 2, characterised in that they contain from 8 to 15% by weight of copper and from 8 to 25% by weight of zinc.

## Revendications

1. Utilisation d'alliages de nickel pour des montures et pièces de lunettes, caractérisés en ce que les alliages contiennent, à côté du nickel, 5 à 20% en poids de cuivre, 5 à 30% en poids de zinc, 0 à 2% en poids de manganèse, 0 à 2% en poids de silicium, 0 à 2% en poids de béryllium et de 0 à 4% en poids de chacun des métaux aluminium, et/ou chrome, et/ou molybdène, et/ou tungstène, et/ou vanadium, et/ou titane, le poids total des teneurs en béryllium, aluminium, chrome, molybdène, tungstène, vanadium et titane ne devant pas dépasser 6% en poids.

2. Utilisation d'alliages de nickel suivant la revendication 1, caractérisés en ce qu'en présence de chrome, molybdène, tungstène, vanadium, et/ou titane, ces alliages contiennent 0 à 0,5% en poids de carbone.

3. Utilisation d'alliages de nickel suivant les revendications 1 et 2, caractérisés en ce qu'ils contiennent de 8 à 15% en poids de cuivre, et de 8 à 25% en poids de zinc.